# EUROPEAN PATENT APPLICATION

(11) **EP 1 478 185 A2**
(43) Date of publication of application: **17.11.2004**
(21) Application number: 04009299.1
(22) Date of filing: 20.04.2004
(51) Int. Cl.: H04N 7/26, H04N 7/50

(54) **A method of protecting image data in the frame buffer of video compression system**

(30) Priority: 13.05.2003 US 436430
(71) Applicant: Broadcom Corporation, Irvine, California 92618-7013 (US)
(72) Inventor: Chen, Sherman (Xuemin), 92129 San Diego CA (US)
(74) Representative: Jehle, Volker Armin, Dipl.-Ing.

(57) **Abstract**

Protecting image data in a frame buffer may include decoding an input compressed video signal and encrypting a portion of the decoded video signal. The encrypted portion of the decoded video signal may be stored in a frame buffer block. The stored portion of the decoded video signal may be decrypted, and a decompressed video signal may be generated from the decrypted portion of the video signal. A block address may be generated for at least a portion of the input compressed video signal and mapped to a frame buffer address. A encryption/decryption key may be generated based on the block address and used for encrypting and decrypting the decoded portion of the video signal. A motion vector may be generated for a portion of the decoded video signal. A block address may be generated based on the generated motion vector and mapped to a frame buffer address for decryption.

## Description

### CROSS-REFERENCE TO RELATED APPLICATIONS/INCORPORATION BY REFERENCE

Not Applicable.

### FIELD OF THE INVENTION

Certain embodiments of the invention relate to video compression. More specifically, certain embodiments of the invention relate to a method and system for protecting image data from piracy, for example, in frame buffers of video compression systems.

### BACKGROUND OF THE INVENTION

In some conventional video processing systems, video data such as movies are vulnerable to piracy and require protection against illegal copying. The loss associated with piracy and unauthorized copying is greatest in high value movies and video programs. Since uncompressed digital video in clear form can be used to create perfect copies of the high value programs in particular, it is necessary to enable the protection of uncompressed video with copy protection technology. To protect against piracy or unauthorized copying, video data such as high value video content is sometimes compressed and encrypted before it can be accessed in memory and storage devices. Video decoding and de-compression systems generally utilize frame buffers for motion prediction, which may provide enhanced picture quality. Video images or pictures stored in these frame buffers are un-compressed and clear. Accordingly, attackers or hackers may utilize various schemes to access these buffers and copy the video images.

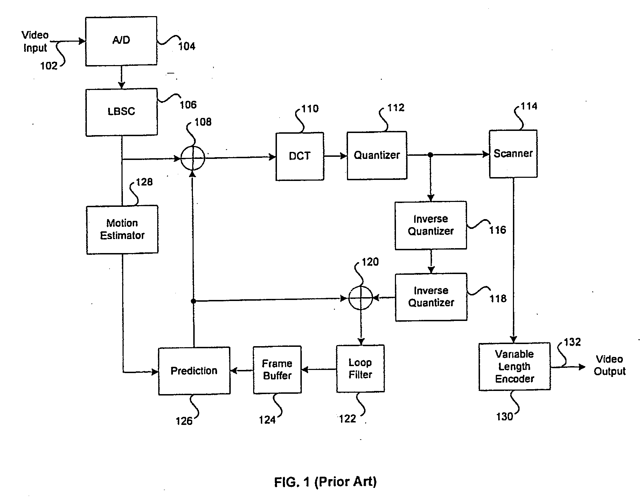

In instances where video is encoded for digital television services, for example, motion compensation (MC) based on the difference between pictures has been effectively utilized to provide acceptable picture quality. Motion compensation may be combined with various transformation methodologies such as discrete cosine transform (DCT) to provide more effective compression. FIG. 1 is a block diagram of a system that utilizes motion compensation and discrete cosine transform. Referring to FIG. 1, there is shown an input video signal 102, an analog-to-digital (A/D) converter 104, a line to block scanning converter (LBSC) block 106, comparator blocks 108, 120, a DCT block 110, a quantization block 112, a scanner block 114, and inverse quantization block 116, an inverse DCT block 118, a loop filter block 122, a frame buffer block 124, prediction block 126, motion estimation block 128, variable length encoder block 130 and output signal 132.

The input video signal 102 is converted from an analog format to a digitized format by the A/D converter 104. The output digital signal produced by the A/D converter may be sent to the line to block scanning converter block 106 for processing. The output signal from the line to block scanning converter block 106 may be processed by the motion estimation block 128. The output signal from the line to block scanning converter block 106 may also be transferred to the comparator block 108. The comparator block 108 is adapted to compare the output signal from the block scanning converter block 106 and the prediction block 126 to discern the differences in the pictures being processed. A resultant output signal produced by the comparator block 108 is transferred to the DCT block 110 for processing. The output of the DCT block 110 is transferred to the quantization block 112 for processing. The output of the quantization block 112 may be scanned by the scanner block 114 and transferred to the variable length encoder block 130. The variable length encoder block 130 produces the resultant output video signal 132, which may be coupled to a channel or transferred to a storage device.

The output signal from the quantization block 112 may also be transferred to the inverse quantization block 116 for processing. The inverse DCT block 118 is configured to perform an inverse DCT operation on a resulting output inverse quantized signal produced by the inverse quantization block 116. An output inverse DCT signal produced by the inverse DCT block 118 may be compared with the output signal produced by the prediction block 126. The signal resulting from the comparison of the output signal from inverse DCT block 118 and the output of the prediction block 126 may be loop filtered by the loop filter block 122. A resultant loop filtered signal may be buffered in frame buffer block 124. The pictures buffered in the frame buffer block 124 may be transferred to the prediction block 126 for processing.

The motion compensation with DCT processing system of FIG. 1 provides comparison between a current picture and a previous picture. For example, an 8 × 8 pixel block for a previous picture may be compared with an 8 × 8 pixel block for a current picture. In this regard, the motion estimator block 128 may determine based on the comparison, those pixels in the pixel block of the current picture that exhibit motion. The motion compensation with DCT processing system operates by comparing, the input signal in units of blocks against a locally decoded copy of the previous picture. A resultant motion vector may be generated, extracted and utilized to calculate a difference between a previous and a current picture. The motion vector is extracted by, for example, shifting vertically or horizontally a selected segment or block of several pixels and performing matching within the block or a macro-block. For example, a 16 × 16 pixel bock of a picture may be utilized.

The motion compensated picture difference signal is then transformed in order to remove or minimize any spatial redundancy that may exist. A variety of compression techniques are applied in quantizing the transform coefficients. One commonly-used method is zig-zag scan, which has been standardized in protocols such as H.261, H.263, MPEG-1, -2, and -4, which are utilized for video transmission encoding. The scanner block 114 may be adapted to perform zig-zag scan, which transforms 2-dimensional formatted data into one dimension formatted. Since the DC component of the coefficients is of critical importance, ordinary linear quantization is utilized. Other components are scanned, for example, in a zig-zag fashion, from low frequency to high frequency, linearly quantized, and variable length encoded. The variable length encoder block 130 may utilize run-length and entropy coding to variable length encode the output of the scanner block 114.

In ITU standards H.261 and H.263, and ISO standards MPEG-1, MPEG-2 and MPEG-4 standards, a macro-block (MB) for the 4:2:0 video format results from combining four Y blocks with one block of the Cb-component and Cr-component. Three useful pictures coding types are I-pictures, P-pictures and B-pictures. I-pictures represent intra-frames, P-pictures represent uni-directional predicted pictures and B-pictures represent bidirectional predicted pictures. For I-picture encoding, each macro-block is intra-coded. For example, each block of 8 x 8 pixels in a macro-block is transformed into 64 coefficients by using DCT and then quantized. The quantization of DC-coefficients differs from that of AC-coefficients. Entropy encoding may be applied to the DC-parameters and the AC-parameters, resulting in a variable-length encoded word. For P-picture or B-picture encoding, the macro-blocks are either motion compensated with DCT transform coded or intra-coded. The prediction of the motion compensation with DCT transform coded macro-blocks is determined by a comparison of the macro-blocks from previous images and the current image. Subsequently, the components of the motion vector are entropy encoded by using a lossless variable-length coding system.

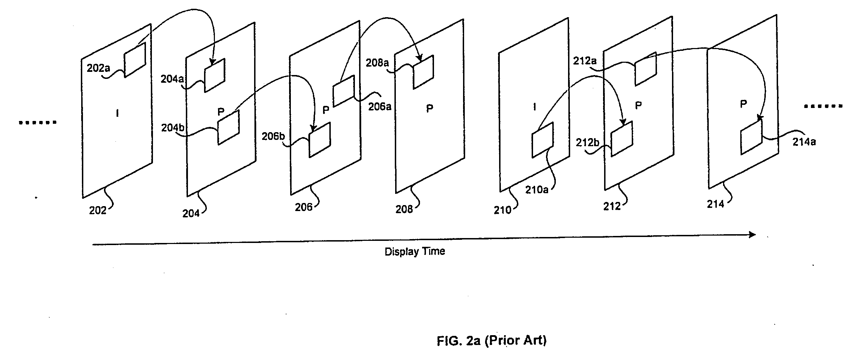

FIG. 2a is a diagram illustrating an exemplary motion prediction. Referring to FIG. 2a, there is shown I-frames 202, 210 and P-frames 204, 206, 208, 212, 214. I-frame 202 includes a block 202a. The P-frame 204 is predicted from the I-frame 202 and includes blocks 204a and 204b. Accordingly, block 204a, is predicted from block 202a. The P-frame 206 is predicted from the P-frame 204 and includes blocks 206a and 206b. Accordingly, block 206b is predicted from block 204b. The P-frame 208 is predicted from the P-frame 206. Accordingly, block 208a is predicted from block 206a. I-frame 210 includes block 210a. The P-frame 212 is predicted from the I-frame 210 and includes blocks 212a and 212b. Accordingly, block 212b, is predicted from block 210a. The P-frame 214 is predicted from the P-frame 212 and includes block 214a. Accordingly, block 214a is predicted from block 212a.

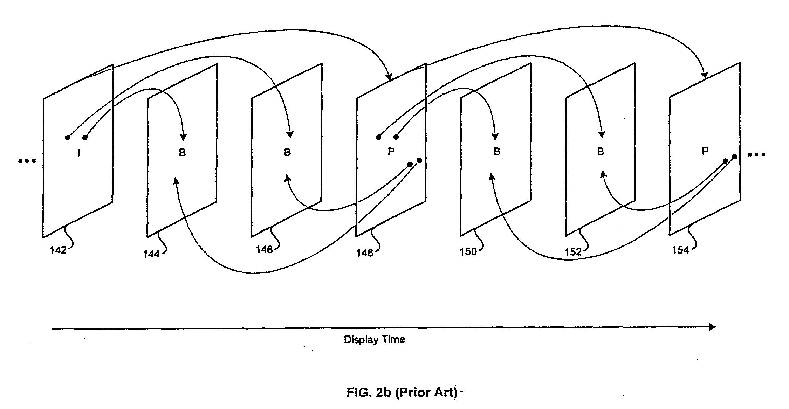

FIG. 2b is a diagram illustrating an exemplary motion prediction. Referring to FIG. 2b, there is shown I-picture 242, B-pictures 244, 246, 250, 252, and P-pictures 248, 254. The P-picture 248 is predicted from the I-picture 242 and the P-picture 254 is predicted from the P-picture 248. B-pictures 244, 246 are predicted from the I-picture 242. The B-pictures 244, 246 are predicted from the I-picture 242 and the B-pictures 250, 252 are predicted from P-picture 248. Since the B-pictures are bi-directional pictures, the B-pictures 244, 246 are predicted from the P-picture 248. Likewise, the B-pictures 250, 252 are predicted from the P-picture 254.

In general, the compression algorithm encodes the some pictures in a video sequence as I-pictures. Other pictures are coded using Inter-picture prediction, e.g. P-pictures. Data from the previously coded I-picture or P-picture are used for prediction. The algorithm processes the pictures of a video sequence in a block based manner. Each input color picture in a video sequence may be partitioned into non-overlapping macro-blocks.

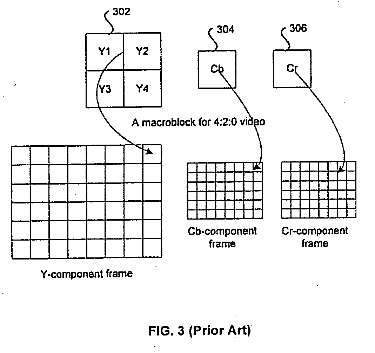

FIG. 3 is a diagram illustrating an exemplary partitioning of an input color picture into non-overlapping macro-blocks. Referring to FIG. 3, there is shown a macro-block for 4:2:0 video. The macro-block includes a luminance component 302, chrominance Cb component 304 and chrominance Cr component 306. The luminance component 302 is mapped to the Y-component frame. The Cb-component 304 is mapped to the Cb-component frame and the Cr-component is mapped to the Cr-component frame. In general, each macro-block contains blocks of data from both luminance and co-sited chrominance bands, namely, four luminance blocks (Y1, Y2, Y3, Y4) and two chrominance blocks (Cb, Cr), each with size 8 x 8 pixel elements (pels). Thus the sampling ratio between Y:Cb:Cr luminance and chrominance pixels is 4:1:1.

P-pictures are coded using motion compensated prediction based on a previous picture. Each picture may be divided into disjoint macro-blocks, each of which may contain 8x8 pels. For each of the macro-blocks, information related to four luminance blocks (Y1, Y2, Y3, Y4) and two chrominance blocks (Cb, Cr) may be coded. B-pictures may be coded using motion compensated prediction based on the two nearest already coded pictures, which are either an I-picture or a P-picture. The direction of prediction for a B-picture is illustrated in FIG. 2b.

When compared to MPEG-1 and MPEG-2, the MPEG-4 part-2 video standard differs in that a scene which is to be coded may be treated as having individual objects. Accordingly, each object in the scene can be coded individually and the decoded objects can be composed in a scene. In MPEG-4 part-2 video, a video object pane (VOP) may be described by texture variations such as a set of luminance and chrominance values and/or by explicit or implicit shape representations. In natural scenes, for example, VOPs may be obtained by semi-automatic or automatic segmentation, and the resulting shape information may be represented as a binary shape mask. On the other hand, for natural and synthetic hybrid scenes, for example, VOPs may be generated by blue screen composition, while shape information may be represented by an 8-bit component. The 8-bit component may be referred to as gray scale shape. Video objects (VOs) may also be subdivided into multiple representations or video object layers (VOLs), allowing scalable representations of the video object. In cases where an entire scene may be considered as one object and all VOPs are rectangular and of the same size as each picture, then a VOP may be characterized as being identical to a picture. Additionally, an optional group of video object planes (GOV) may be added to the video coding structure to assist in random access operations.

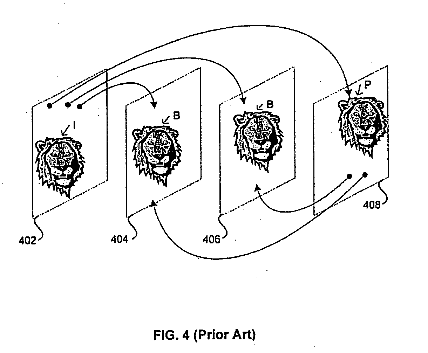

MPEG-4 video extends the concept of I-pictures, P-pictures and B-pictures to VOPs, thereby resulting in an intra-VOP (I-VOP), a predictive VOP (P-VOP) and a bidirectional VOP (B-VOP). FIG. 4 is a block diagram illustrating an exemplary coding structure which utilizes two consecutive B-VOPs between a pair of reference VOPs. The I-VOP and P-VOP may be referred to as reference VOPs. Referring to FIG. 4, there is shown an I-VOP 402, B-VOPs 404, 406 and a P-VOP 408. The P-VOP 408 is predicted from the I-VOP 402. The B-VOP 404 is generated from the I-VOP 402 and the P-VOP 408. Similarly, the B-VOP 406 is generated from the I-VOP 402 and the P-VOP 408.

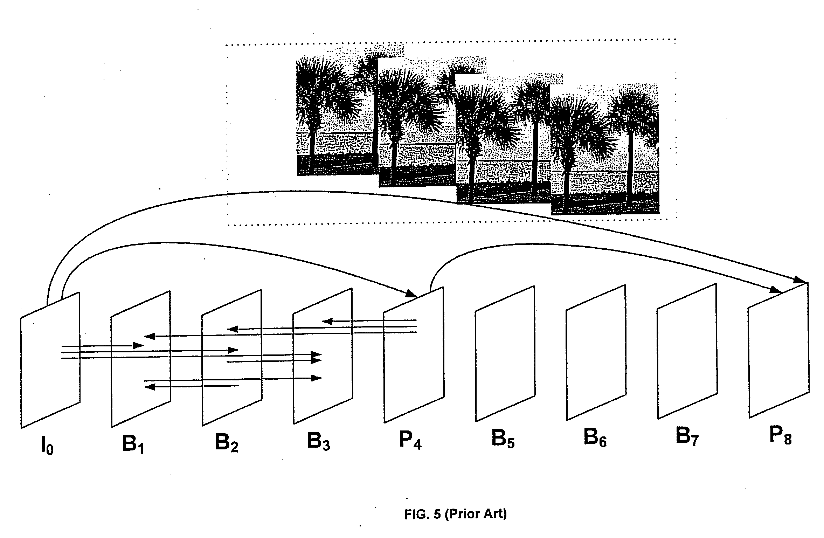

In certain instances, motion compensation may utilize multiple reference frames for MPEG-4 part-10 advanced video coding (AVC) standard. FIG. 5 is a block diagram illustrating the use of multiple reference frames for motion compensation. Additionally, FIG. 5 illustrates an image generated by utilizing multiple reference frames for motion compensation as illustrated in FIG. 5. Referring to FIG. 5, there is shown an I-picture I₀, P-pictures P₄, P₈ and B-pictures B₁, B₂, B₃, B₅, B₆, B₇. P-pictures P₄, P₈ are predicted from I-picture I₀. Additionally, P-picture P₈ is also predicted from P-picture P₄. B-picture B₁ is predicted from I-picture I₀, B-pictures B₂, B₃ and P-picture P₄. B-picture B₂ is predicted from I-picture I₀, B-pictures B₁, B₃ and P-picture P₄. Finally, B-picture B₃ is predicted from I-picture I₀, B-pictures B₁, B₂ and P-picture P₄.

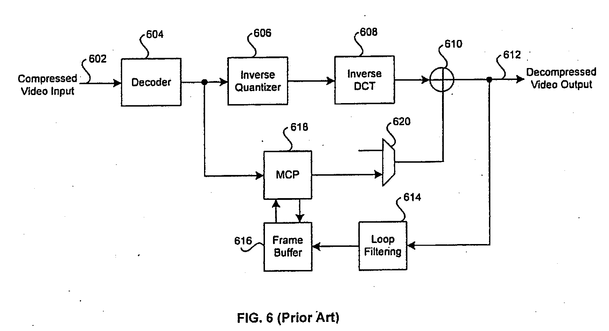

FIG. 6 is a block diagram illustrating an exemplary digital video decompressor. Referring to FIG. 6, there is shown a decoder block 604, and inverse quantizer block 606, and inverse DCT block 608, and comparator block 610, a loop filtering block 614, a frame buffer block 616, a motion compensated predictor block (MCP) 618 and a selector block 620. The input signal 602 to the decoder block 604 is a compressed video signal. The decoder block 604 may be an entropy decoder block. Decompressed video output signal 612 is the output signal generated by the digital video decompressor.

The decoder block 604 may be adapted to extract and decode the variable length coded words in the compressed video input signal 602. The resulting output signal generated by the decoder block 604 contains motion vectors and quantizer values for the non-zero transform coefficients. The output of the decoder block 604 may be transferred to the inverse quantizer block 606 where the decoded quantizer values may be processed. A resultant output signal from the inverse quantizer block 606 may be transferred to the inverse DCT block 608 for processing.

The motion vectors generated by the decoder block 604 may be processed by the motion compensated predictor block 618. The selector 620 may be configured to transfer the output of the motion compensated predictor block 618 to the comparator block 610. Alternatively, the output of the motion compensated predictor block 618 may be buffered in the frame buffer block 616. Accordingly, the comparator block 610 may be adapted to compare a current and a previous picture. The output of the comparator 612 may be generated by the comparator block 610. Notwithstanding, an output signal from the comparator block 610 may be transferred to the loop filtering block 614 for processing. The output of the loop filtering block 614 may be buffered in the buffer block 616, from which it may be transferred to the motion compensated predictor block 618 for processing.

In operation, with the reconstruction of all non-zero transform coefficients belonging to one block and their subsequent inverse transform, a quantized block of pixel values may be obtained. The motion compensated pixels from the previous decoded pictures, which may be stored in the frame buffers, may be added to the prediction error to recover the particular macro-block. By processing an entire compressed video bitstream, all picture blocks in the bitstream may be decoded and reconstructed. The frame buffers are used for motion prediction during video de-compression systems contains clear uncompressed images and picture information. As a result, the information stored in these frame buffers are readily accessible and may easily be copied or otherwise compromised.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Certain embodiments of the invention provide a method and system for protecting image data in a frame buffer. A method for protecting image data in a frame buffer may include decoding an input compressed video signal and encrypting a portion of the decoded video signal. The encrypted portion of the decoded video signal may be stored in a frame buffer block. The stored portion of the decoded video signal may be decrypted and a decompressed video signal generated from the decrypted portion of the video signal. A block address may be generated for at least a portion of the input compressed video signal. The generated block address may be mapped to a frame buffer address. One or more encryption/decryption keys may be generated for encrypting the decoded portion of the video signal. The encryption/decryption keys may be generated based on the generated block address.

Prior to generating the decompressed video signal, a portion or the decoded input compressed video signal may be inverse quantized. A portion of the inverse quantized decoded input compressed video signal may be inverse discrete cosine transformed. Accordingly, the decompressed video signal may be generated based on at least a portion of the inverse discrete cosine transformed portion of the inverse quantized decoded input compressed video signal.

In another aspect of the invention, a motion vector may be generated for at least a portion of the decoded video signal. A block address may be generated based on the generated motion vector. The generated block address for a portion of the decoded video signal may be mapped to a frame buffer address. An encryption/decryption key may be generated for decrypting a portion of the decoded video signal. A portion of the decoded video signal may be decrypted using the encryption/decryption key. The decrypted portion of the decoded video signal may be motion compensated. To further protect the image in the frame buffer block, the encrypted portion of the decoded video signal may be scrambled in the frame buffer block.

Another embodiment of the invention may provide a machine-readable storage, having stored thereon, a computer program having at least one code section for protecting image data in a frame buffer. The at least one code section may be executable by a machine, thereby causing the machine to perform the steps as described above, for protecting image data in a frame buffer.

Aspects of the invention are also found in a system for protecting image data in a frame buffer. The system may include a decoder block adapted to decode an input compressed video signal and an encryption block or encryptor for encrypting a portion of the decoded video signal. A frame buffer block may include frame buffers which may be adapted to store the encrypted portion of the decoded video signal. A decryption block or decryptor may be provided to decrypt the stored portion of the decoded video signal. The decryption block may generate an output decompressed video signal from the decrypted portion of the decoded video signal. The system may further include an address generator adapted to generate a block address for a portion of the input compressed video signal. One or more address mappers may be adapted to map the generated block address to a frame buffer address. At least one key generator may be adapted to generate an encryption/decryption key for encrypting the decoded portion of the video signal. The key generator may generate the encryption/decryption key based on the generated block address.

An inverse quantizer may be configured to inverse quantize a portion of the decoded input compressed video signal. An inverse discrete cosine transformer may inverse discrete cosine transform a portion of the inverse quantized decoded input compressed video signal. Accordingly, a comparator coupled to the inverse discrete cosine transformer may generate the decompressed video signal based on at least a portion of the inverse discrete cosine transformed portion of the inverse quantized decoded input compressed video signal.

In another aspect of the invention, a motion predictor may generate a motion vector for a portion of the decoded video signal. An address generator may generate a block address based on the generated motion vector. One or more address mappers may be adapted to map the generated block address for a portion of the decoded video signal to a frame buffer address. A key generator may generate one or more encryption/decryption keys for decrypting a portion of the decoded video signal. A decryption block may decrypt a portion of the decoded video signal using the encryption/decryption key. The system may also include a motion compensation predictor adapted to motion compensate the decrypted portion of the decoded video signal. In order to further protect the image data, the encryption block may be configured to scramble the encrypted at least a portion of the decoded video signal in the frame buffer block.

According to an aspect of the invention, a method for protecting image data in a frame buffer comprises:
decoding an input compressed video signal;
encrypting at least a portion of said decoded video signal; and
storing said encrypted at least a portion of said decoded video signal in a frame buffer.

Advantageously, the method further comprises decrypting said stored at least a portion of said decoded video signal.

Advantageously, the method further comprises:
inverse quantizing at least a portion of said decoded input compressed video signal;
inverse discrete cosine transforming said at least a portion of said inverse quantized decoded input compressed video signal; and
generating a decompressed video signal based on said inverse discrete cosine transformed at least a portion of said inverse quantized decoded input compressed video signal.

Advantageously, the method further comprises generating a block address for at least a portion of said input compressed video signal.

Advantageously, the method further comprises mapping said generated block address to a frame buffer address.

Advantageously, the method further comprises generating at least one encryption/decryption key for said encrypting.

Advantageously, the method further comprises generating said encryption/decryption key for said at least a portion of said decoded video signal based on said generated block address.

Advantageously, the method further comprises generating a motion vector for said at least a portion of said decoded video signal.

Advantageously, the method further comprises generating a block address based on said generated motion vector.

Advantageously, the method further comprises mapping said generated block address for said at least a portion of said decoded video signal to a frame buffer address.

Advantageously, the method further comprises generating at least one encryption/decryption key for decrypting said at least a portion of said decoded video signal.

Advantageously, the method further comprises decrypting said at least a portion of said decoded video signal using said at least one encryption/decryption key.

Advantageously, the method further comprises motion compensating said decrypted at least a portion of said decoded video signal.

Advantageously, the method further comprises scrambling said encrypted at least a portion of said decoded video signal in said frame buffer.

According to another aspect of the invention, a machine-readable storage is provided having stored thereon, a computer program having at least one code section for protecting image data in a frame buffer, the at least one code section being executable by a machine for causing the machine to perform steps comprising:
decoding an input compressed video signal;
encrypting at least a portion of said decoded video signal; and
storing said encrypted at least a portion of said decoded video signal in a frame buffer.

Advantageously, the machine-readable storage further comprises code for decrypting said stored at least a portion of said decoded video signal.

Advantageously, the machine-readable storage further comprises: code for inverse quantizing at least a portion of said decoded input compressed video signal;
code for inverse discrete cosine transforming said at least a portion of said inverse quantized decoded input compressed video signal; and
code for generating a decompressed video signal based on said inverse discrete cosine transformed at least a portion of said inverse quantized decoded input compressed video signal.

Advantageously, the machine-readable storage further comprises code for generating a block address for at least a portion of said input compressed video signal.

Advantageously, the machine-readable storage further comprises code for mapping said generated block address to a frame buffer address.

Advantageously, the machine-readable storage further comprises code for generating at least one encryption/decryption key for said encrypting.

Advantageously, the machine-readable storage further comprises code for generating said encryption/decryption key for said at least a portion of said decoded video signal based on said generated block address.

Advantageously, the machine-readable storage further comprises code for generating a motion vector for said at least a portion of said decoded video signal.

Advantageously, the machine-readable storage further comprises code for generating a block address based on said generated motion vector.

Advantageously, the machine-readable storage further comprises code for mapping said generated block address for said at least a portion of said decoded video signal to a frame buffer address.

Advantageously, the machine-readable storage further comprises code for generating at least one encryption/decryption key for decrypting said at least a portion of said decoded video signal.

Advantageously, the machine-readable storage further comprises code for decrypting said at least a portion of said decoded video signal using said at least one encryption/decryption key.

Advantageously, the machine-readable storage further comprises code for motion compensating said decrypted at least a portion of said decoded video signal.

Advantageously, the machine-readable storage further comprises code for scrambling said encrypted at least a portion of said decoded video signal in said frame buffer.

According to another aspect of the invention, a system for protecting image data in a frame buffer comprises:
a decoder adapted to decode an input compressed video signal;
an encryptor adapted to encrypt at least a portion of said decoded video signal; and
a frame buffer adapted to store said encrypted at least a portion of said decoded video signal.

Advantageously, the system further comprises a decryptor adapted to decrypt said stored at least a portion of said decoded video signal.

Advantageously, the system further comprises:
an inverse quantizer adapted to inverse quantize at least a portion of said decoded input compressed video signal;
an inverse discrete cosine transformer adapted to inverse discrete cosine transform said at least a portion of said inverse quantized decoded input compressed video signal; and
a comparator coupled to said inverse discrete cosine transformer adapted to generate a decompressed video signal based on said inverse discrete cosine transformed at least a portion of said inverse quantized decoded input compressed video signal.

Advantageously, the system further comprises an address generator adapted to generate a block address for at least a portion of said input compressed video signal.

Advantageously, the system further comprises at least one address mapper adapted to map said generated block address to a frame buffer address.

Advantageously, the system further comprises at least one key generator adapted to generate at least one encryption/decryption key for said encrypting.

Advantageously, said at least one key generator is adapted to generate said encryption/decryption key for said at least a portion of said decoded video signal based on said generated block address.

Advantageously, the system further comprises a motion control predictor adapted to generate a motion vector for said at least a portion of said decoded video signal.

Advantageously, the system further comprises an address generator adapted to generate a block address based on said generated motion vector.

Advantageously, the system further comprises at least one address mapper adapted to map said generated block address for said at least a portion of said decoded video signal to a frame buffer address.

Advantageously, the system further comprises a key generator adapted to generate at least one encryption/decryption key for decrypting said at least a portion of said decoded video signal.

Advantageously, the system further comprises a decryptor adapted to decrypt said at least a portion of said decoded video signal using said at least one encryption/decryption key.

Advantageously, the system further comprises a motion compensation predictor adapted to motion compensate said decrypted at least a portion of said decoded video signal.

Advantageously, said encryptor is adapted to scramble said encrypted at least a portion of said decoded video signal in said frame buffer.

These and other advantages, aspects and novel features of the present invention, as well as details of a illustrated embodiment thereof, will be more fully understood from the following description and drawings.

### BRIEF DESCRIPTION OF SEVERAL VIEWS OF THE DRAWINGS

FIG. 1 is a block diagram of a system that utilizes motion compensation with discrete cosine transform.

FIG. 2a is a diagram illustrating an exemplary motion prediction.

FIG. 2b is a diagram illustrating an exemplary motion prediction.

FIG. 3 is a diagram illustrating an exemplary partitioning of,an input color picture into non-overlapping macro-blocks.

FIG. 4 is a block diagram illustrating an exemplary coding structure which utilizes two consecutive B-VOPs between a pair of reference VOPs.

FIG. 5 is a block diagram illustrating the use of multiple reference frames for motion compensation.

FIG. 6 is a block diagram illustrating an exemplary digital video decompressor.

FIG. 7 is a block diagram illustrating an exemplary digital video de-compressor with frame buffer copy protection in accordance with an embodiment of the invention.

FIG. 8 is a block diagram of an exemplary encryption block as illustrated in FIG. 7 in accordance with an embodiment of the invention.

FIG. 9 is a block diagram illustrating an exemplary frame buffer encryption in accordance with an embodiment of the invention.

FIG. 10 is a block diagram of an exemplary frame buffer decryption in accordance with an embodiment of the invention.

FIG. 11 is a block diagram illustrating an exemplary frame buffer decryption in accordance with an embodiment of the invention.

### DETAILED DESCRIPTION OF THE INVENTION

Aspects of the invention provide a method and system for protecting image data in a frame buffer. A method for protecting image data in a frame buffer may include decoding an input compressed video signal and encrypting a portion of the decoded video signal. The encrypted portion of the decoded video signal may be stored in a frame buffer block. The stored portion of the decoded video signal may be decrypted and a decompressed video signal generated from the decrypted portion of the video signal. A block address may be generated for at least a portion of the input compressed video signal. The generated block address may be mapped to a frame buffer address. One or more encryption/decryption keys may be generated for encrypting the decoded portion of the video signal. The encryption/decryption keys may be generated based on the generated block address.

Prior to generating the decompressed video signal, a portion of the decoded input compressed video signal may be inverse quantized. A portion of the inverse quantized decoded input compressed video signal may be inverse discrete cosine transformed. Accordingly, the decompressed video signal may be generated based on at least a portion of the inverse discrete cosine transformed portion of the inverse quantized decoded input compressed video signal.

In another aspect of the invention, a motion vector may be generated for at least a portion of the decoded video signal. A block address may be generated based on the generated motion vector. The generated block address for a portion of the decoded video signal may be mapped to a frame buffer address. An encryption/decryption key may be generated for decrypting a portion of the decoded video signal. A portion of the decoded video signal may be decrypted using the encryption/decryption key. The decrypted portion of the decoded video signal may be motion compensated. To further protect the image in the frame buffer block, the encrypted portion of the decoded video signal may be scrambled in the frame buffer block.

In accordance with an embodiment of the invention, since video image data is stored in clear form in the frame buffers, the image data may be encrypted to ensure its integrity and prevent unauthorized access and usage such as copying. However, to ensure portability, interoperability and compatibility with various existing and future video compression standards and systems, a video encoder may include pertinent intelligence required to decipher the manner in which video image data should be to properly encoded. This may include the protocol or format. Accordingly, a corresponding video decoder is provided which has the capability to determine the manner in which a video image should be decoded. To ensure portability, interoperability and compatibility, the video decoder and the video encoder is compatible with existing and new video compression standards such as MPEG-1, MPEG-2 video and/or MPEG-4 AVC. Furthermore, the video encoder and decoder is flexible enough to accommodate future compression standards.

One enhanced functionality that may provide a more secure video compression system may include the use of varying encryption and decryption keys between encryption blocks in the system. To further enhance data security, encrypted video data located in the frame buffers may be dynamically remapped so that the location of the pixel block in the frame buffer is unpredictable. Furthermore, the encryption and decryption of video information may be flexible enough to operate with interlaced and progressive scan formatted video.

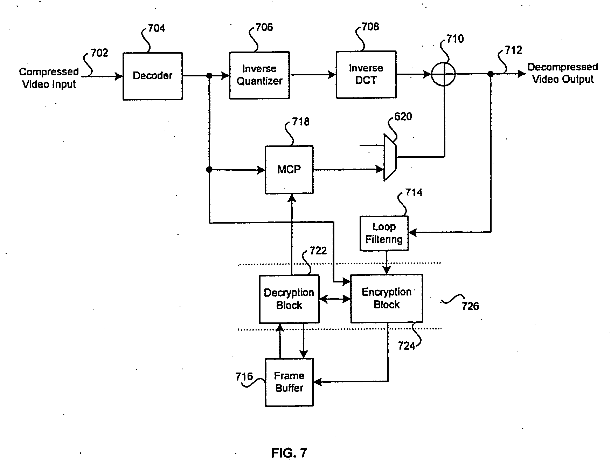

FIG. 7 is a block diagram illustrating an exemplary digital video de-compressor with frame buffer copy protection in accordance with an embodiment of the invention. Referring to FIG. 7, there is shown a decoder block 704, and inverse quantizer block 706, and inverse DCT block 708, a comparator block 710, a loop filtering block 714, a frame buffer block 716, a motion compensated predictor block (MCP) 718, a selector block 620 and a protection block 726. The protection block 726 may include an encryption block 724 and a decryption block 722. An input signal 702 to the decoder block 704 is a compressed video signal. The decoder block 704 may be an entropy decoder block. An output signal 712 from the comparator block 710 is a decompressed video output signal generated by the digital video decompressor.

The frame buffers in the frame buffer block 716 may be utilized for storing or buffering image data, which may be utilized for motion prediction during video de-compression. Prior to storing image data in the frame buffer block 716, the image data may be encrypted by the encryption block 722. Accordingly, clear image data and picture information may not be stored in the frame buffer block 716. As a result, the information stored in these frame buffers are not readily accessible and may not be easily copied or otherwise compromised.

The decoder block 704 may be configured to extract the variable length coded words in the bitstream for the compressed video input signal 702. Subsequent to extracting the variable length coded words, the decoder block 704 may decode the extracted variable length coded words. The resulting output signal generated by the decoder block 704 while it is decoding the variable length coded words, may include motion vectors and quantizer values for the non-zero transform coefficients. The output of the decoder block 704 may be transferred to the inverse quantizer block 706 where the decoded and quantized values may be processed. A resultant output signal from the inverse quantizer block 706 may be transferred to the inverse DCT block 708 for processing.

The motion vectors generated by the decoder block 704 may be processed by the motion compensated predictor block 718. The selector 720 may be configured to transfer the output of the motion compensated predictor block 718 to the comparator block 710. In this manner, a motion compensated error for a previously quantized macro-block pixel values may be added to a prediction error to more efficiently recover current and subsequent macro-blocks. Alternatively, the selector block 720 may be configured to prevent the output of the motion compensated predictor block 718 from being processed by the comparator block 710. Notwithstanding, the output of the decoder block 704 may be encrypted by the encryption block 724. The encrypted output from the encryption block 724 may be buffered in the frame buffer block 716. The encrypted image data in the frame buffer block 716 may be transferred to the decryption block 722 where it may be decrypted and then transferred to the motion compensated predictor block 718 for processing. At least one data line and at least one address line may be utilized to transfer data from the frame buffer block 716 for processing by the decryption block 722.

Notwithstanding, the comparator block 710 may be adapted to compare a current and a previous macro-block, in order to determine for example, a prediction error. The output signal 712 produced by the video decompressor may be generated by the comparator block 710 and may include decompressed pictures. Notwithstanding, an output signal from the comparator block 710 may be transferred to the loop filtering block 714 for processing, which may include loop filtering. The output signal generated by the loop filtering block 714 may be buffered in the frame buffer block 716, from which it may be transferred to the motion compensated predictor block 718 for processing.

In operation, the quantized macro-block of pixel values may be obtained by reconstructing the non-zero transform coefficients corresponding to a particular macro-block. Furthermore, the reconstructed non-zero transform coefficients may be inversely DCT transformed by the inverse DCT block 708. The motion compensated pixels derived from previously decoded pictures which are stored in the frame buffer block 716, may be added to the prediction error to more accurately recover a particular macro-block. By processing the entire bit stream, all picture blocks may be decoded and reconstructed.

In another embodiment of the invention, the image data or information stored in the frame buffer block may be scrambled to further enhance data security of the video decompressor. One or more reference frames in the image data may be stored in a scrambled manner within the frame buffer block 716. In this regard, to further enhance data security, encrypted video data located in the frame buffers block 716 may be dynamically remapped so that the location of the pixel block in the frame buffer is unpredictable.

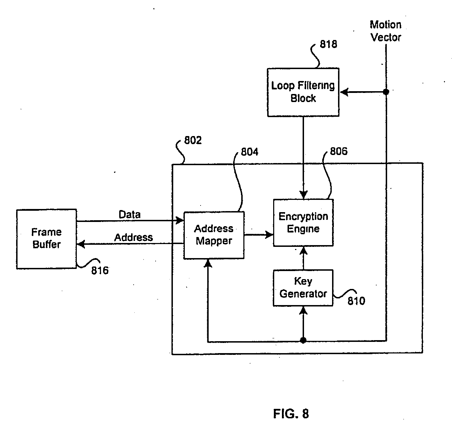

FIG. 8 is a block diagram of an exemplary encryption block as illustrated in FIG. 7 in accordance with an embodiment of the invention. Referring to FIG. 8, there is shown an encryption block 802, a frame buffer block 816 and a loop filtering block 818. The encryption block 802 may include an address mapper 804, an encryption engine 806 and a key generator 810. The key generator 810 may be adapted to generate one or more keys that may be utilized to encrypt and/or decrypt image data stored in the frame buffer block 816. The encryption engine 806, may be a DES engine, for example, and may be adapted to encrypt image data prior to storing the image data in the frame buffer block 816. The encryption engine 806 may also be adapted to scramble input image data so as to securely protect information. The address mapper 804 may be configured to re-map frame buffer addresses.

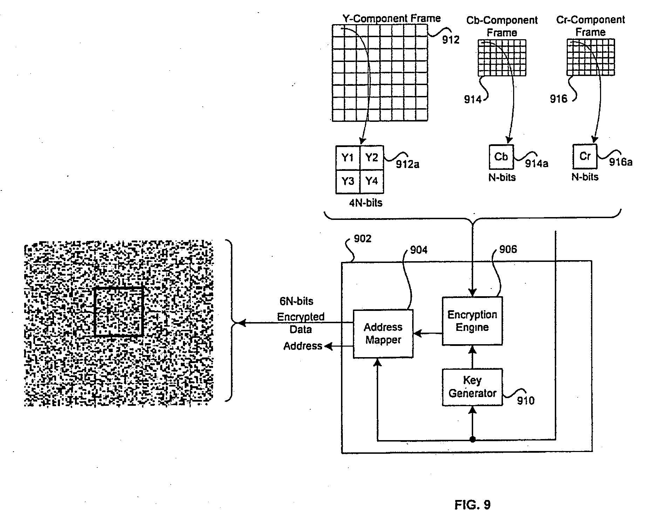

FIG. 9 is a block diagram illustrating an exemplary frame buffer encryption in accordance with an embodiment of the invention. Referring to FIG. 9, there is shown an encryption block 902, a frame buffer block 916 and a loop filtering block 918. The encryption block 902 may include an address mapper 904, an encryption engine 906 and a key generator 910. The encryption block 902 is similar to the encryption block 802 of FIG. 8. FIG. 9 also includes a Y-component frame 912, a Cb-component frame 914 and a Cr-component frame 916. For illustrative purposes, a 4:2:0 formatted video is utilized. However, the invention is not limited in this regard.

For illustrative purposes, the Y-component of a frame may be partitioned into 2Mx2M pixel blocks. The Cb-component and the Cr-component of a frame may be partitioned into MxM pixel blocks. For 8-bit video in 4:2:0 format, for example, MxM pixels have N=MxMx8 bits. Each 2Mx2M pixel of the Y-component block and its corresponding MxM pixel Cb-block and Cr-block may be grouped together and sent to the encryption engine 906 for processing. For example, Y-component block 912a, and its corresponding MxM pixel Cb-block 914a and Cr-block 916a are grouped and encrypted by the encryption engine 906. The key generator 910 may utilize, for example, the block address to generate a key for encrypting each grouped Y-component block 912a, and its corresponding MxM pixel Cb-block 914a and Cr-block 916a. The encryption or DES engine 906 may scramble the image data stored in the frame buffer block. To further secure image data in the frame buffer block, at least some of the keys utilized for scrambling image data stored in the frame buffer block may be address dependent. The address mapper 904 may be adapted to re-map the block address to the frame buffer address. The resulting encrypted image data may be stored in the frame buffer based on the re-mapped address.

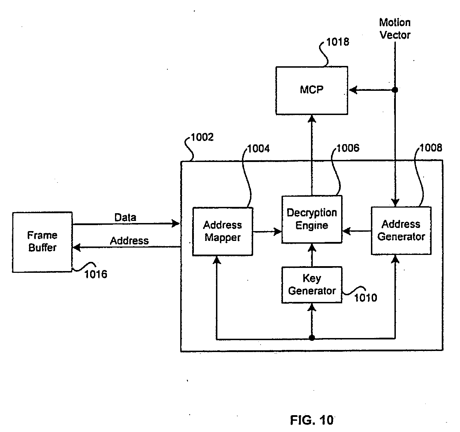

FIG. 10 is a block diagram of an exemplary frame buffer decryption block in accordance with an embodiment of the invention. Referring to FIG. 10, there is shown a decryption block 1002, a MCP block 1018 and a frame buffer block 1016. The decryption block 1002 may include an address mapper 1004, a decryption engine 1006 and address generator block 1008 and a key generator block 1010.

The address mapper 1004 retrieves or receives a block address and maps the block address into a corresponding frame buffer address. The decryption engine 1006 may be a DES engine, for example, and may be adapted to decrypt image data which has been transferred from the frame buffer block 1016. The address generator block 1008 may be adapted to generate block addresses based on, for example, a motion vector.

In operation, the address generator 1008 may receive motion vectors and utilize the received motion vectors to compute or generate a block address. The address mapper 1004 may map the generated block address to a corresponding frame address, which may be utilized for fetching encrypted image data. The key generator 1010 may generate one or more decryption keys, which may be utilized by the decryption or DES engine to decrypt the encrypted image data identified by the frame buffer address. The encryption or DES engine 1006 may decrypt the image data using the key generated by the key generator 1010. The resulting decrypted image data may be sent to the motion compensated predictor block 1018 for processing.

In one aspect of the invention, the address mapper 904 in the encryption block 902 and the address mapper 1004 in the decryption block 1002 may be operated in a synchronous manner. Synchronous operation may ensure that the address mapping or remapping may change from picture frame to picture frame and/or between groups of pictures (GOPs), for example. During motion prediction of each motion compensated block, multiple surrounding blocks may be fetched for decryption. However, the invention is not limited in this regard. In certain video compression standards, for example, MPEG-2 main profile (MP), MPEG-4 advanced simple profile (ASP) and MPEG-4 advanced video coding (AVC), the block sizes for motion compensation may be different. Accordingly, the block size utilized for encrypting frame buffers may also be different.

The following illustrates exemplary block sizes that may be utilized for encryption frame buffers for various video compression standards. Although the buffer may be expressed in frame format, it may also be extended to field format.

| | **Block Size for MC** | **Block Size for encrypting of frame buffers** |
|---|---|---|
| **MPEG-2 MP** | 16x16 | 16x16 |
| | 16x8 (for interlaced coding) | |
| **MPEG-4 (part-2) ASP** | 16x16 | 8x8 |
| | 16x8 (for interlaced coding) | |
| | 8x8 | |
| **MPEG-4 (part-10) AVC** | 16x16 | 4x4 |
| | 16x8 | |
| | 8x16 | |
| | 8x8 | |
| | 4x8 | |
| | 8x4 | |
| | 4x4 | |

For video in the 4:2:0 format, a:
16x16 block represents 16x16 Y pixels + 8x8 Cb pixels + 8x8 Cr pixels.
16x8 block represents 16x8 Y pixels + 8x4 Cb pixels + 8x4 Cr pixels.
8x16 block represents 8x16 Y pixels + 4x8 Cb pixels + 4x8 Cr pixels
8x8 block represents 8x8 Y pixels + 4x4 Cb pixels + 4x4 Cr pixels.
8x4 block represents 8x4 Y pixels + 4x2 Cb pixels + 4x2 Cr pixels.
4x8 block represents 4x8 Y pixels + 2x4 Cb pixels + 2x4 Cr pixels.
4x4 block represents 4x4 Y pixels + 2x2 Cb pixels + 2x2 Cr pixels.

Since a 16x16 block has 48x64 bits, an 8x8 block has 12x64 bits, and a 4x4 block has 3x64 bits, these sizes may be suitably utilized for the commonly-used cryptographic algorithms, such as DES and AES.

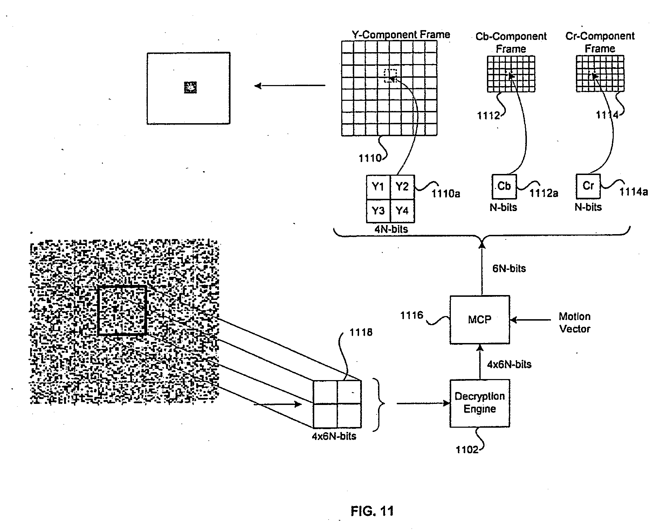

FIG. 11 is a block diagram illustrating an exemplary frame buffer decryption in accordance with an embodiment of the invention. Referring to FIG. 11, there is shown a decryption block 1102, a motion compensated prediction block 1116, a Y-component frame 1110, a Cb-component frame 1112 and a Cr-component frame 1114.

In operation a 4x6N-bit block may be retrieved from the frame buffer block for decryption by the decryption block 1102. The resulting 4x6N-bits decrypted by the decryption block 1102 may be processed by the motion compensated predictor block 1116. The output of the motion compensated predictor block 1116 includes the corresponding 6N-bits previously encrypted. This includes, the 4-Nbits Y-component block 1110a, the N-bit Cb-component block 1112a and the Cr-component block 1114a.

In light of the foregoing, protecting image data in a frame buffer may include decoding an input compressed video signal and encrypting a portion of the decoded video signal. The encrypted portion of the decoded video signal may be stored in a frame buffer block. The stored portion of the decoded video signal may be decrypted and a decompressed video signal generated from the decrypted portion of the video signal. A block address may be generated for at least a portion of the input compressed video signal and mapped to a frame buffer address. A encryption/decryption key may be generated based on the block address and used for encrypting and decrypting the decoded portion of the video signal. A motion vector may be generated for a portion of the decoded video signal. A block address may be generated based on the generated motion vector and mapped to a frame buffer address for decryption.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for protecting image data in a frame buffer, the method comprising:
decoding an input compressed video signal;
encrypting at least a portion of said decoded video signal; and
storing said encrypted at least a portion of said decoded video signal in a frame buffer.

2. The method according to claim 1, further comprising decrypting said stored at least a portion of said decoded video signal.

3. The method according to claim 1 or 2, further comprising:
inverse quantizing at least a portion of said decoded input compressed video signal;
inverse discrete cosine transforming said at least a portion of said inverse quantized decoded input compressed video signal; and
generating a decompressed video signal based on said inverse discrete cosine transformed at least a portion of said inverse quantized decoded input compressed video signal.

4. The method according to any of the preceding claims, further comprising generating a block address for at least a portion of said input compressed video signal.

5. A machine-readable storage having stored thereon, a computer program having at least one code section for protecting image data in a frame buffer, the at least one code section being executable by a machine for causing the machine to perform steps comprising:
decoding an input compressed video signal;
encrypting at least a portion of said decoded video signal; and
storing said encrypted at least a portion of said decoded video signal in a frame buffer.

6. The machine-readable storage according to claim 5, further comprising code for decrypting said stored at least a portion of said decoded video signal.

7. The machine-readable storage according to claim 5 or 6, further comprising: code for inverse quantizing at least a portion of said decoded input compressed video signal;
code for inverse discrete cosine transforming said at least a portion of said inverse quantized decoded input compressed video signal; and
code for generating a decompressed video signal based on said inverse discrete cosine transformed at least a portion of said inverse quantized decoded input compressed video signal.

8. A system for protecting image data in a frame buffer, the system comprising:
a decoder adapted to decode an input compressed video signal;
an encryptor adapted to encrypt at least a portion of said decoded video signal; and
a frame buffer adapted to store said encrypted at least a portion of said decoded video signal.

9. The system according to claim 8, further comprising a decryptor adapted to decrypt said stored at least a portion of said decoded video signal.

10. The system according to claim 8 or 9, further comprising:
an inverse quantizer adapted to inverse quantize at least a portion of said decoded input compressed video signal;
an inverse discrete cosine transformer adapted to inverse discrete cosine transform said at least a portion of said inverse quantized decoded input compressed video signal; and
a comparator coupled to said inverse discrete cosine transformer adapted to generate a decompressed video signal based on said inverse discrete cosine transformed at least a portion of said inverse quantized decoded input compressed video signal.
